Europäisches Patentamt

European Patent Office

Office européen des brevets

(19)

(11) Publication number: **0 006 663**
**B1**

## (12) EUROPEAN PATENT SPECIFICATION

(45) Date of publication of patent specification: **12.05.82**

(51) Int. Cl.³: **G 01 B 11/24**, G 01 B 11/02

(21) Application number: **79200321.2**

(22) Date of filing: **20.06.79**

(54) **Method and device for assessing and checking the circumferential shape of an object.**

(30) Priority: **20.06.78 NL 7806656**

(43) Date of publication of application:
**09.01.80 Bulletin 80/1**

(45) Publication of the grant of the patent:
**12.05.82 Bulletin 82/19**

(84) Designated Contracting States:
**AT BE CH DE FR GB IT LU NL SE**

(56) References cited:
**DE - A - 1 925 693**
**DE - A - 2 753 593**
**FR - A - 2 343 994**
**US - A - 3 822 946**
**US - A - 4 064 534**

(73) Proprietor: **Leuven Research & Development V.Z.W.**
**Groot Begijnhof No. 59, Benedenstraat**
**B-3000 Leuven (BE)**

(72) Inventor: **Van den Berghe, Herman Benediktus**
**No. 9, Justin Scheepmanstraat**
**B-3031 Oud-Heverlee (BE)**
Inventor: **Oosterlinck, André Jules Joseph**
**No. 16, Twee-Bruggenstraat**
**B-3020 Herent (BE)**

(74) Representative: **Hoijtink, Reinoud et al,**
**OCTROOIBUREAU ARNOLD & SIEDSMA**
**Sweelinckplein 1**
**NL-2517 GK The Hague (NL)**

Courier Press, Leamington Spa, England.

# Method and device for assessing and checking the circumferential shape of an object

The invention relates to a method and device of locating, assessing and checking the circumferential shape of an object, by means of a camera scanning the object line by line and by forming signals having values which are representative of the intensity of the light emitted by points on a said line and of comparing the signal values with given values. This method is known from the U.S. specification 3.822.946 and from the French specification 2.343.994. According to this method the image of the object may be defined, for example, in a coordinate system by scanning, for example, pointwise. From this image of discrete values the shape characteristics of the object can be calculated and measured and for each resultant measuring value a comparison may be made with a predetermined value. If the measured and the fixed values differ from one another, a decision can be taken in accordance with predetermined criteria whether the examined object, for example, satisfies the requirements. In order to obtain sufficient accuracy a large number of measuring points is required. The means for recording the measuring points, their fixing thereof and processing them into measuring values of the shape characteristics and comparing said measuring values with the given values usually comprise a large computer. A drawback of this method is that due to the great amount of data a comparatively large memory and a large number of calculations are required, whilst furthermore due to the large number of data to be processed said method is comparatively time consuming.

As an alternative, photographic means are used for fixing the circumferential shape of an object for comparison with a reference image. The comparison of the pictures is usually performed visually. This method is time consuming and requires much labour.

The object of the invention is to mitigate the aforesaid disadvantages and to provide a method and a device which permit of assessing the circumferential shape of an object, within a short time of, for example, two seconds at comparatively low costs.

According to the invention this is achieved by the integration of the signal values of a sequence of points in a selected direction, by counting the points of said sequence having at least one predetermined signal value, and by determining the locations of the circumferential points. According to an advantage of the invention the integration of the light intensities of a number of associated points appreciably reduces the amount of data to be processed, whilst the resultant integrated value together with the count of a number of points having a signal value exceeding a selected threshold value and the location of the circumferential points is sufficient for taking certain decisions by calculation. The location of the object within the field of view is obtained by detecting the co-ordinates in the selected direction of the circumferential points of the object.

In carrying out this method first a row in the direction of length and subsequently a row at right angles to the direction of length of the image may be chosen. The image can be formed by exposure to diffuse light, the picture being taken by means of a vidicon camera. As an alternative, a line scanner may be employed to this end. In order to obtain a distinction between different parts of an object selection may be applied to the grey value of the image. This is achieved by integrating only those signal values which exceed a given threshold value. In counting only those points may be counted, the signal values of which exceed a given threshold value. In assessing the co-ordinates of the circumferential points the signal values of those points are taken which are equal to the adjustable threshold.

The invention will be described more fully with reference to the assessment of the circumference of a reed relay.

Figure 1 is a schematic sectional view of a reed relay with an indication of the dimensions to be checked.

Figure 2 is a graphical illustration of the integrated profile obtained by line-wise integration of the light intensities in a direction at right angles to the longitudinal axis of the reed relay.

Figure 3 is a graph of the width profile obtained by line-wise counting the points having signal values exceeding a given threshold in a direction normal to the longitudinal axis of the reed relay.

Figure 4 is a graph of the integrated profile in a direction at right angles to that of Figure 2.

Figure 5 is a graph of the integrated value according to Figure 2 with an indication of the corresponding dimensions of the reed relay of Figure 1.

Figure 6 is a graph of the integrated value with a different threshold value with an indication of the corresponding dimensions of the reed relay of Figure 1.

Figure 7 is a graphical representation of the counted values with a higher threshold than that of Figure 3 with an indication of the corresponding dimensions of the reed relay of Figure 1.

Figure 8 illustrates the integrated profile in a direction at right angles to that of Figure 2, with an indication of the corresponding dimensions of the reed relay.

Figure 9 shows the integrated profile of Figure 8 with a different threshold value with an indication of a corresponding dimension in the reed relay.

Figure 10 represents the value of the co-ordinates of the lower half of the outermost circumferential shapes of the reed relay for each scanned line at right angles to the longitudinal axis of said relay.

Figure 11 illustrates for the same scanning direction as in Figure 10 the value of the co-ordinates of the upper half of the outermost circumferential shape. By means thereof the absolute position of the object in the viewing field can be assessed so that the measured dimensions of the reed relay in other graphs can be corrected.

Figure 12 shows schematically the device for carrying out the method in accordance with the invention and

Figure 13 shows schematically the circuit arrangement for carrying out the method according to the invention.

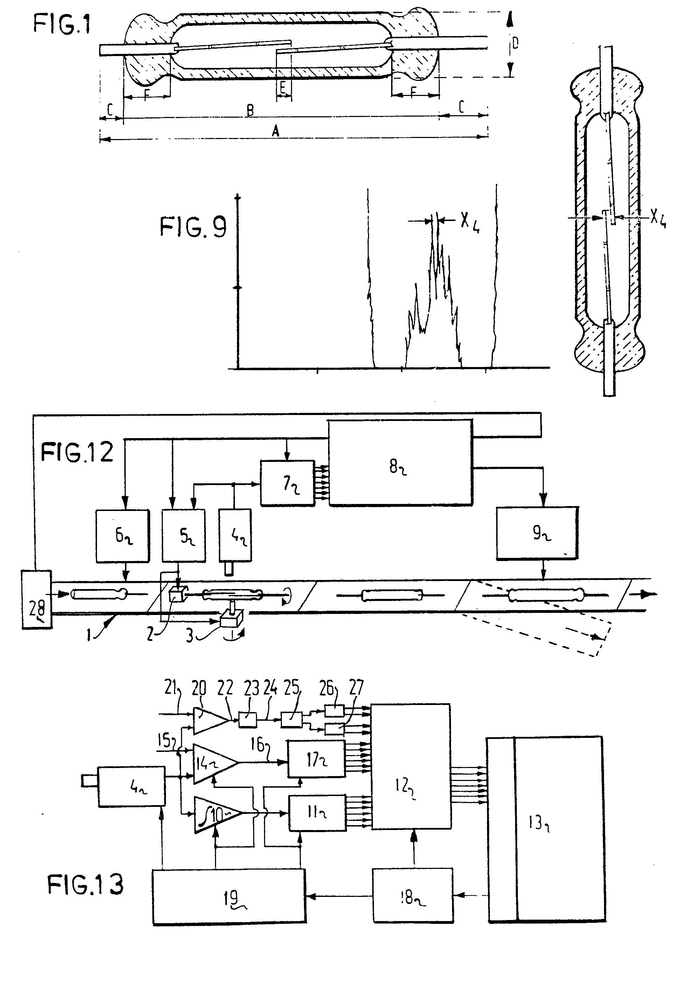

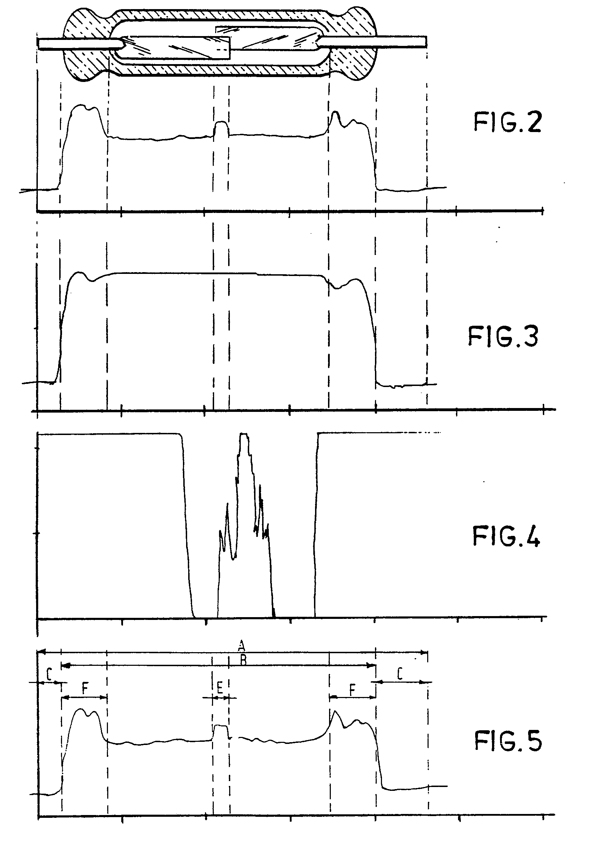

Figure 2 illustrates the integrated profile of the signal values of the points lying on a line at right angles to the direction of length of the reed relay shown in Figure 1. Only the signal values exceeding a selected threshold value are integrated. From the graphical representation it appears that conformity with the shape of the reed relay in the selected direction is existing. Figure 3 is for the same reed relay the graphical representation of the number of the points lying on the same line as in Figure 2, the signal values of which exceed the selected value.

Figure 4 is the graphical representation of the integrated values of signal values associated with points lying on a line normal to the direction in Figure 2, that is to say, in the direction of length of the reed relay.

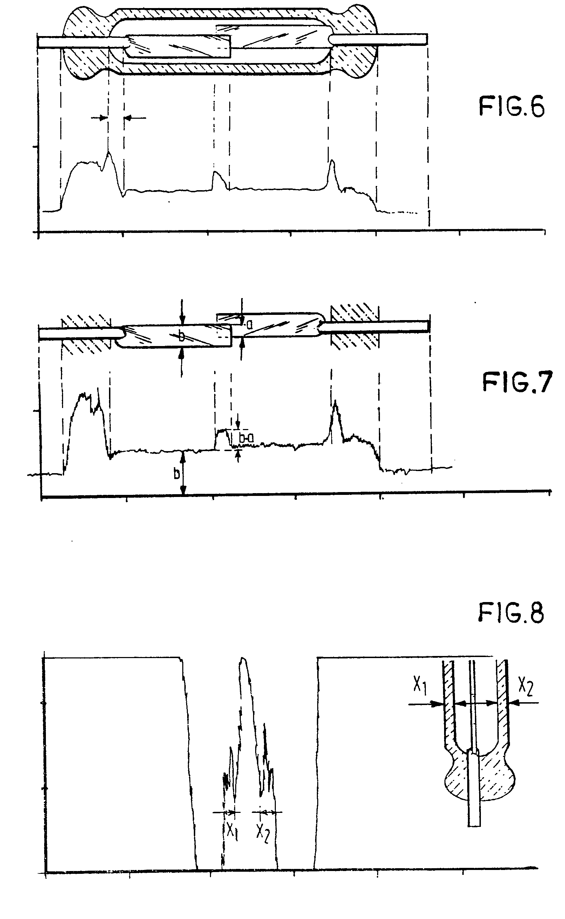

Figure 5 corresponds with Figure 2. In Figure 5 corresponding dimensions of Figure 1 are indicated. From Figure 5 it appears that the dimensions A, B, C, E and F can be inferred from the graph of the integrated values. The correct points on the axes of the graph can be set with the aid of appropriate threshold values. Therefore, the assessment of said points can be performed automatically. Figures 6 and 7 show graphs corresponding with that of Figure 2, for a different threshold value, the associated counted value of the number of points and the integrated value corresponding to Figure 4. In each of the graphs is indicated a corresponding dimension of the reed relay.

Figure 8 is a graphical representation with the aid of which the dimensions of the reed relay indicated therein can be assessed.

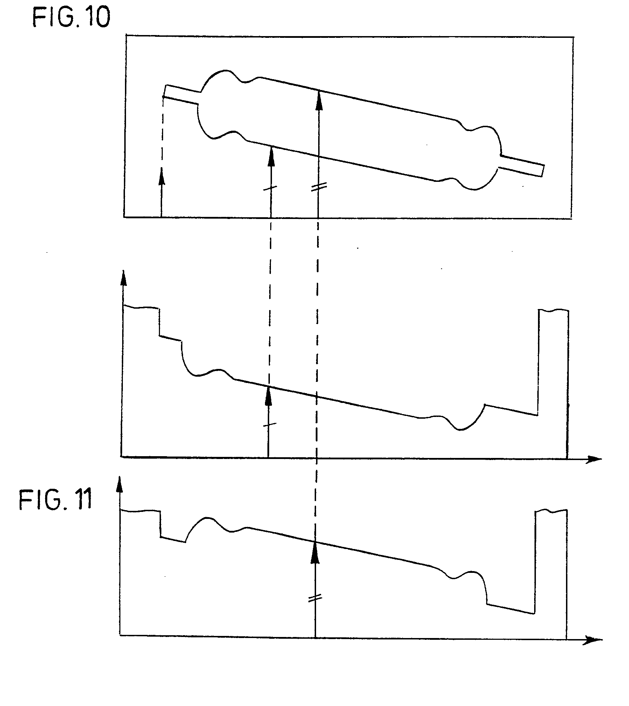

Figure 9 is a graphical representation corresponding with that of Figure 8 but for a different signal value with the corresponding dimensions of the relay that is to say the distance between the reeds of the relay.

From these Figures it will be obvious that with a suitable choice of the threshold value only a few counts will be sufficient.

Figure 12 shows schematically an implementation of the method according to the invention. The relay to be examined is supplied on a belt 1. The relay is received in a holding device which can turn the relay about the axes 2 and 3.

With the aid of a camera 4 a picture is taken of the relay. The position of the relay is set with the aid of the control-device 5 for the holding device. The transport of the relay is governed by the belt control 6. The picture is scanned line-wise in the processing device 7 according to the invention, integrated and counted. The resultant data are fed to a computer 8, which also provides the control of the units 5 and 6. On the basis of a comparison of the signal value to the given value the computer 8 decides whether the examined relay lies within the predetermined limits. By means of an ejection unit 9 a relay not meeting the requirements can be removed from the belt. A statistical processing of the results of the inspection may give rise to a direct feedback to the production machine 28 so that frequent deviations can be signalled and the relevant setting of the production machine can be corrected.

The camera 4, which may be a television camera (see Figure 13) converts the light intensities of the points on a line into electric signals which are applied to the analogue integrator 10. After the scan of a line or part thereof the integrated value converted by the analogue-digital converter into a digital value is fed through the adaptor unit 12 to the computer 13. The beginning and the end of a video line may be fixed with the aid of conventional synchronisation pulses. The electric signal corresponding to the light intensity of a point is passed by the camera also to a comparator 14, a further input of which receives a reference signal 15. When the magnitude of the signal emanating from the camera 4 exceeds the reference signal, the comparator 14 transmits a binary signal 16 to the counter 17, which is advanced by one position. At the end of a scanned line or part thereof the counted value is applied via the unit 12 to the computer 13. From the computer 13 the whole process is governed via the control-unit 18 and the synchronizing unit 19. As stated above the integrator may be set in a manner such that only those values which exceed a given value are integrated.

The signal from the television camera is furthermore applied to a second comparator 20, to which a further reference signal 21 is applied. The second binary signal 22 is used for detecting the circumferential points of the object in a flank detection member 23. By the generated pulses 24 corresponding to the positions of the circumferential points a counter 25 is read, which notes the position of the scanned point. At each new point of the line the counter is reset to zero and the co-ordinates of the circumferential points are stored in registers 26 and 27 and passed via the unit 12 to the computer 13. When in this way an image is completely scanned the computer has instantly available one integrated profile, one width profile and the co-ordinates in the direction of length of the circumferential points of the object.

## Claims

1. A method of locating, assessing and checking the circumferential shape of an object, by means of camera scanning the object line by line and by forming signals having values which are representative of the intensity of the light emitted by points on a said line and of comparing the signal values with given values characterized by the integration of the signal values of a sequence of points in a selected direction, by counting the points of said sequence having at least one predetermined signal value, and by determining the locations of the circumferential points.

2. A method as claimed in claim 1 characterized in that first a sequence in the direction of length and subsequently a sequence at right angles to the direction of length of the image are selected.

3. A method as claimed in claims 1 or 2 characterized in that only those points are counted, the signal values of which exceed a predetermined threshold value.

4. A device for carrying out the method claimed in claim 3 characterized by a holding device for the object, a camera for scanning the object, line by line, by means for forming signals having values representative of the intensity of the light emitted by points at said line, by means for integrating the signal values of the points lying on a line exceeding a given threshold value, by means for counting points lying on a line having a signal value exceeding said threshold value, by means for assessing the co-ordinates of the circumferential points of the object for a given, adjustable threshold value and by means for transmitting the integrated value obtained for each line, the count and the co-ordinates to a computer.

5. A device as claimed in claim 4 characterized in that the integrating means are formed by an analogue integrator and an analogue-digital converter connected to the output of the former.

## Revendications

1. Procédé de localisation d'évaluation et de contrôle de la forme circonférentielle d'un objet, au moyen d'une caméra qui analyse l'objet ligne par ligne et en formant des signaux ayant des valeurs qui sont représentatives de l'intensité de la lumière émise par des points situés sur une telle ligne et en comparant les valeurs de signaux à des valeurs données, acaractérisé par l'intégration des valeurs de signaux d'une séquence de points dans une direction choisie, par le comptage des points de ladite séquence ayant au moins une valeur de signal prédéterminée, et par la détermination des positions des points circonférentiels.

2. Procédé suivant la revendication 1, caractérisé en ce qu'on choisit tout d'abord une séquence dans la direction de la longueur et ensuite une séquence à angle droit par rapport à la direction de la longueur de l'image.

3. Procédé suivant l'une des revendications 1 et 2, caractérisé en ce que seuls sont comptés les points dont les valeurs de signaux excèdent une valeur de seuil prédéterminée.

4. Un dispositif pour mettre en oeuvre le procédé suivant la revendication 3, caractérisé par un dispositif de maintien pour l'objet, une caméra pour analyser l'objet ligne par ligne, par des moyens pour former des signaux ayant des valeurs représentatives de l'intensité de la lumière émise par des points de ladite ligne, par des moyens pour intégrer les valeurs de signaux des points situés sur une ligne qui excèdent une valeur de seuil donnée, par des moyens pour compter les points situés sur une ligne et qui ont une valeur de signal excédant ladite valeur de seuil, par des moyens pour évaluer les coordonnées des points circonférentiels de l'objet pour une valeur de seuil donnée réglable et par des moyens pour transmettre la valeur intégrée obtenue pour chaque ligne, le compte et les coordonnées à une calculatrice.

5. Un dispositif suivant la revendication 4, caractérisé en ce que les moyens d'intégration sont formés par un intégrateur analogique et un convertisseur analogique-numérique connecté à la sortie de celui-ci.

## Patentansprüche

1. Verfahren zum Orten, feststellen und kontrollieren der Umfangsform eines Gegenstandes mittels einer Kamera, die den Gegenstand linienweise abtastet, und durch Bildung von Signalen mit Werten, die repräsentativ für die Stärke des Lichtes sind, das durch Punkte auf einer derartigen Linie ausgesandt wird, und Vergleichung der Signalwerte mit vorgegebenen Werten, gekennzeichnet durch die Integration der Signalwerte einer in einer gewählten Richtung liegenden Reihe von Punkten, das Zählen der auf dieser Reihe liegenden Punkte mit mindestens einem vorbestimmten Signalwert und durch das Bestimmen der Stellen der Umfangspunkte.

2. Verfahren nach Anspruch 1, dadurch gekennzeichnet, dass zunächst eine Reihe in Längsrichtung und anschliessend eine Reihe senkrecht zu der Längsrichtung des Bildes gewählt wird.

3. Verfahren nach Anspruch 1 oder 2, dadurch gekennzeichnet, dass lediglich die Punkte gezählt werden, deren Signalwert über einem bestimmten Schwellenwert liegt.

4. Vorrichtung zum Durchführen des Verfahrens nach Anspruch 3, gekennzeichnet durch eine Festhaltevorrichtung für den Gegenstand, eine Kamera zum Linienweise abtasten des Bildes, durch Mittel zur Bildung von Signalen mit Werten, der repräsentativ für die Stärke des durch jeden Punkt ausgesandten Lichtes ist, Mittel zum integrieren der über einem bestimmten Schwellenwert liegenden Signalwerte der auf einer Linie liegenden Punkte; Mittel zum Zählen der auf einer Linie liegenden Punkte mit einem Signalwert grösser als dieser Schwellenwert, Mittel zum Bestimmen der Koordinaten der Umfangspunkte des Gegenstandes dür einen bestimmten, einstellbaren Schwellenwert und Mittel zum Zuführen des je Linie erhaltenen integrierten Wertes, der Zählung und der Koordinaten zu einem Rechenorgan.

5. Vorrichtung nach Anspruch 4, dadurch gekennzeichnet, dass die Mittel zum Integrieren aus einem Analogintegrator und einem mit dessen Ausgang verbundenen Analogdigitalumwandler bestehen.

FIG.1

FIG.9

$X_4$

$X_4$

FIG.12

$8_2$

$7_2$

$6_2$   $5_2$   $4_2$   $9_2$

28

1   2   3

FIG.13

21  20  22  23 24  25   26  27

$15_2$   $16_2$   $17_2$

$14_2$

$4_2$

$10_2$   $11_2$   $12_2$   $13_2$

19   18_2

1

FIG.2

FIG.3

FIG.4

FIG.5

2

FIG.6

FIG.7

FIG.8

FIG. 10

FIG. 11